# EUROPEAN PATENT APPLICATION

(11) **EP 1 981 148 A2**
(43) Date of publication of application: **15.10.2008**
(21) Application number: 08006955.2
(22) Date of filing: 08.04.2008
(51) Int. Cl.: H02K 1/26, H02K 1/30

(54) **Laminated rotor of an electric machine and corresponding manufacturing process**

(30) Priority: 10.04.2007 IT to20070250
(71) Applicant: General Cab S.r.l., 14010 Celle Enomondo (Asti) (IT)
(72) Inventor: Bononi, Elvio, 14010 Celle Enomondo (Asti) (IT)
(74) Representative: Aprà, Mario

(57) **Abstract**

The present invention relates to a generic electric motor, in which the laminated pack is made with a geometry such as to reduce the amount of metal off-cuts to a minimum.

Said motor has a rotor obtained by stamping two distinct identical parts (10), designed to he assembled in such a way as to enable their mutual connection. Accommodated inside a slot (32) is a drive member (40), which in turn houses a drive shaft (50). The particular conformation of the two identical parts enables maximum compacting of the figures on the strip or sheet of metal that is stamped.

## Description

The present invention concerns an armature with laminated core for an electrical machine. The invention moreover relates to the process for producing said laminated-core armature for an electrical machine.

In practically all known electric motors, the ferromagnetic part or armature is made with a laminated core using a known technology: stamping from a sheet of metal.

Said technology Is used in the production of motors of any size, from the smallest to the biggest, irrespective of the physical principle used (permanent-magnet motors, wound-feld motors, synchronous motors, asynchronous motors, reluctance motors, etc.) and the type of supply (d.c., a.c., high or low voltage).

According to said technology individual laminations, identical to one another, are obtained, which are then stacked on top of one another to form a laminated pack or core until the desired thickness is reached, are electrically Insulated on the sides that are to receive the electrical conductors, and are finally wound on the outside of the core with electrical conductors.

The material used is typically an FeSi metal alloy, having mechanical characteristics suitable for being stamped from hard metal or hardened steel and magnetic characteristics such as to reduce the magnetic losses due to hysterisis and parasitic currents.

In general, the laminations used, for example, in rotors, which have a general circular shape, with outer teeth having their stems that are set radially and with slots having adjacent teeth, are stamped in sets of a number of laminated cores from each sheet of metal, using blanking dies in which the figures of the laminations are set as close as possible to one another. Said procedure, however, involves a very high waste of metal as a consequence of the off-cuts of material formed between one figure and another. Said drawback becomes particularly serious when single-figure stampings are made out of a sheet or strip of metal.

Another drawback of known laminated-core armatures lies in the fact that the laminations are obtained from metal coming from rolled sheets of large dimensions, rolled in reels and cut to width according to the dimensions of the figure to be stamped. The original sheets are characterized by a rather large tolerance on the thickness since, during rolling, the thickness of the material in a direction orthogonal to the direction of rolling is far from altogether uniform. The result is that also the strips of metal of smaller width obtained from the original strip have thicknesses that are slightly different from one side to another.

In the case of laminations with substantially circular profiles, the Individual laminations are stamped and stacked all In the same direction, which is the direction of rolling. Consequently, the amount of the variation of thickness on the finished laminated core sums up.

To overcome this intrinsic imbalance to rotation, frequently a rotation of 180° is introduced with respect to the axis of the rotating part on the blanking die, half-way through formation of the pack, an operation which is slightly more complex and costly and cannot be applied generally to all types of armature. Furthermore, with this operation the effects of the static imbalance are eliminated because the centres of mass of the two half-cores (having a height half that of the final pack) are symmetrical with respect to the axis of the shaft, but a dynamic imbalance is introduced because the two centres of mass are located at different heights (with respect to the main axis of the shaft).

Sometimes a rotation of one slot pitch between adjacent teeth is introduced at each stroke of the press, but this involves a decidedly higher degree of complexity. Obviously, the profiles of the teeth of the laminations must In this case all be the same.

Starting from the realization of said drawbacks, the aim of the present invention is to propose a solution.

One purpose of the present Invention is to provide a laminated-core armature for an electrical machine, in which the laminations will present a structure such as to Improve the arrangement of the figures of the blanking die so as to reduce considerably the waste or off-cuts from the sheet or strip of stamped metal.

Another purpose of the present Invention is to provide a laminated-core armature for an electrical machine, in which any static imbalance is compensated for and no dynamic imbalance is introduced.

Yet another purpose of the present invention Is to provide a process for producing a laminated-core armature for an electrical machine, which will enable a significant limitation of waste material or off-cuts coming from the operation of stamping of the laminations from a sheet or strip of metal.

A further purpose of the invention is to provide a process as specified, which will enable optimization of the winding of the armature.

With a view to achieving the above purposes, the present invention provides a laminated-core armature for an electrical machine, in which each lamination comprises two identical halves or half-laminations, each substantially crescent-shaped, with a convex edge part and an internal concavity, assembled in such a way as to be symmetrical with respect to the axis of rotation of the motor and form a finished laminated-core body having a essentially cylindrical shape.

Considering, for example, the case of a rotor of an electrical machine, said finished core is made up of the set of two packs of half-laminations, appropriately assembled on the drive shaft using suitable joining means.

Consequently, according to the present invention, the drawback of the waste of material typical of known armatures is solved owing to the fact that the aforesaid half-laminations are stamped adjacent and close to one another In the sheet or strip of metal so that the part with convex edge of a half-lamination is partially contained in the concavity of an adjacent half-lamination, thus minimizing the amount of waste material.

On the other hand, the armature for an electrical machine according to the present invention is intrinsically balanced to rotation. In fact, the variation of thickness by any amount from one edge to another of the profile on each pack of half-laminations, as well as any minor irregularity in the corresponding stamping of each half-lamination (ovalizations, reduction in size due to stress relief, incorrect centring, etc.) are compensated perfectly after assembly of the two half-cores together. In this way, any static imbalance is compensated for, whilst no dynamic imbalance is introduced.

Some examples of motors in which said invention can be used are:
permanent-magnet d.c. motors, with commutator having an indefinite number of poles;
wound-field d.c. motors (starter motors), with commutator having an indefinite number of poles;
a.c. motors with commutator (universal motors) with an indefinite number of poles;
asynchronous motors;
wound-field synchronous motors;
external-rotor brushless motors; and
Internal-rotor brushless motors.

The main characteristic of the armature according to the present invention forms the subject of Claim 1.

The main characteristic of the process forming the subject of the present invention is specified Claim 15.

Further advantageous characteristics are described in the dependent claims.

The aforesaid claims are understood as incorporated as a whole herein.

The above and other purposes, characteristics and advantages of the invention will emerge more clearly from the ensuing detailed description, which is provided purely by way of indication, with reference to the annexed exemplifying drawings, In which:
- Figure 1 illustrates, in front view, a single portion of lamination, the so-called "half-lamination";
- Figure 2 shows, in negative, the figures of four successive half-laminations obtained by stamping from a strip of metal;
- Figure 3 is a perspective view of a complete half-core, formed by stacking a plurality of half-laminations, ready to be assembled with a homologue thereof;
- Figure 4 is a perspective view of two half-cores, similar to that of Figure 3, assembled together with slot-fitting means provided in the half-laminations that make them up;
- Figure 5 is a view similar to that of Figure 4, in which, however, said two half-cores are joined also by means of a retention insert having a shaft coaxial to the core itself;
- Figure 6 is a front view of the rotor according to the invention, with partial winding and in which the positioning of some windings on said pack is indicated;
- Figure 7 shows the rotor of Figure 6, In which, however, winding is complete; and
- Figure 8 illustrates a deformed laminated core, provided for a better understanding of the invention.

Illustrated in the drawings is an embodiment exemplifying the laminated-core armature according to the invention, constituting the rotor of a permanent-magnet d.c. motor with a commutator having 16 slots, 4 poles, and a winding pitch of 3 (where by "winding pitch" is meant the number of teeth that are wound by a generic winding).

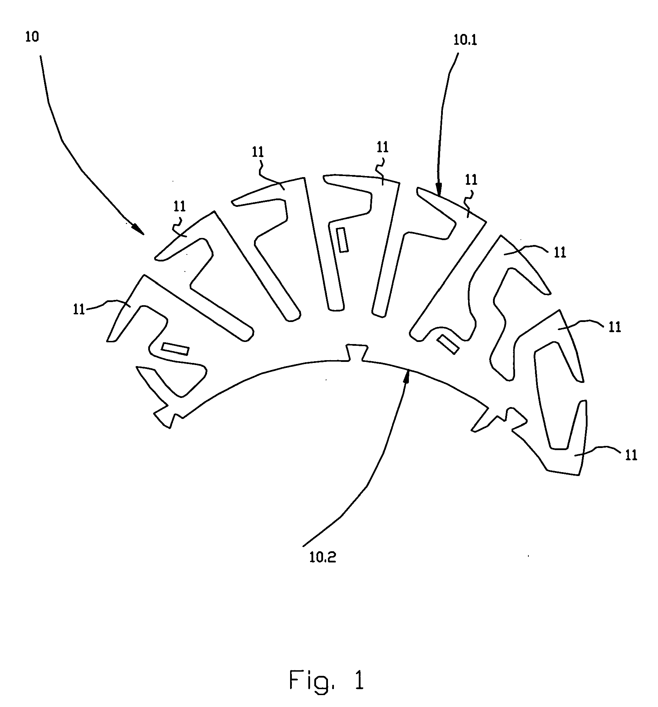

Designated by 10 in Figure 1 Is one of the two half-laminations making up a lamination of the armature according to the invention. Said half-lamination 10 is basically enclosed between two arcs of circumference, an outer one 10.1 and an inner one 10.2 substantially having the same value. In particular, the envelope of the outer profiles of the teeth 11 of said half-lamination 10 has a shape substantially of a half-circumference 10.1, of radius equal to the radius of the final cylindrical core formed by the pack of assembled laminations, whilst the inner portion of said half-lamination 10 has a profile coinciding with a half-circumference 10.2, which has, for an ample portion, substantially the same radius as the outer profile.

The substantial equality of the two arcs of circumference 10.1 and 10.2 optimizes, as will emerge more clearly from what follows, the exploitation of the strip or sheet of metal used to obtain the individual half-laminations 10 that make up said laminated core.

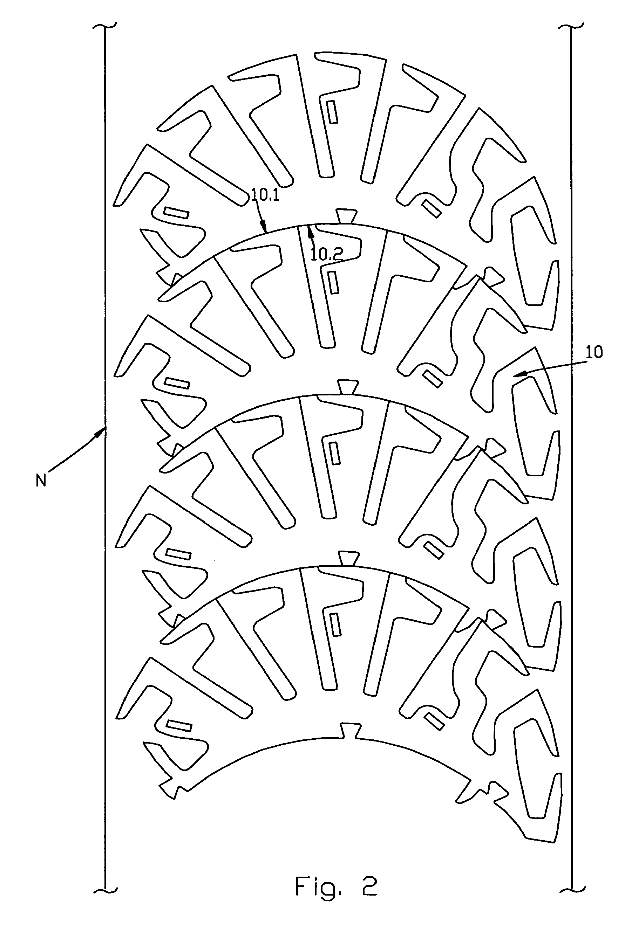

In fact, obtained by means of stamping from a strip of metal N (Figure 2) is a plurality of half-laminations 10, adjacent and close to one another in linear sequence one after another in such a way that the convex outer edge with arc of circumference 10.1 of a half-lamination 10 is partially contained In the concave inner edge with arc of circumference 10.2 of an adjacent half-lamination. In this way, the stamping pitch Is substantially reduced to a minimum, compatibly with the magnetic constraints of the motor and the mechanical requirements of assembly of the half-laminations 10 and hence of the laminations assembled together.

It should be considered that, for a generic rotor of an electrical machine of small-to-medium dimensions, typically having a diameter of between 50 and 100 mm, the ratio between metal effectively stamped and metal used in the motor and strip of metal consumed is between 40% and 42%, according to the type of laminated core. In the case where the stamping pitch were equal to half the diameter or slightly less, the saving of material would be negligible. Considering, instead, a partial co-penetration of the figures, the stamping pitch is reduced to less than half of the diameter. As said co-penetration increases, the stamping pitch is consequently reduced (Figure 2), as likewise the amount of off-cuts generated, but the complexity of the geometry of the component and the electrical and magnetic constraints that such solution at a certain point reach a limit.

By way of non-limiting example, with the complex geometry of the slot between the teeth 11 and of mutual slotting between half-laminations 10, as illustrated in Figures 1 and 2, said efficiency rises to between 54% and 56%, with a saving in the stamping pitch and in the width of the strip used and hence in the material actually used, of 25% with respect to the conventional solution, in which a single figure with a substantially circular external boundary is stamped from a strip of metal and in which the objects stamped are substantially adjacent to one another on the strip itself.

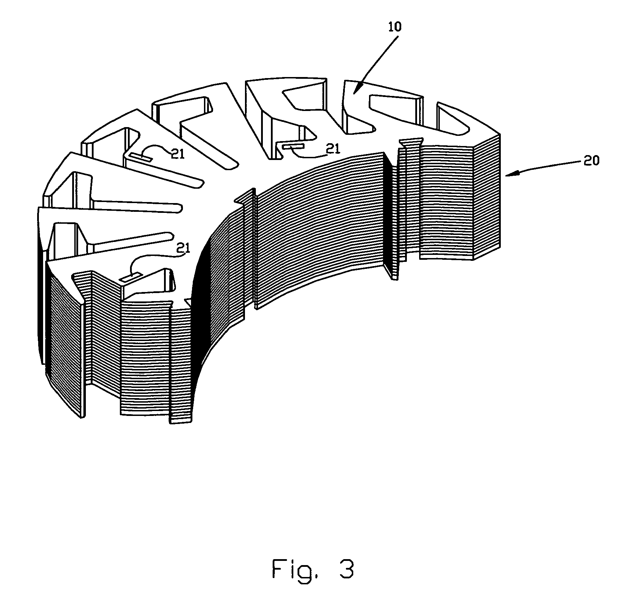

Designated by 20 in Figure 3 is a pack of half-laminations 10 stacked and bound together, by way of example, through clinching holes 21 made by the blanking die itself.

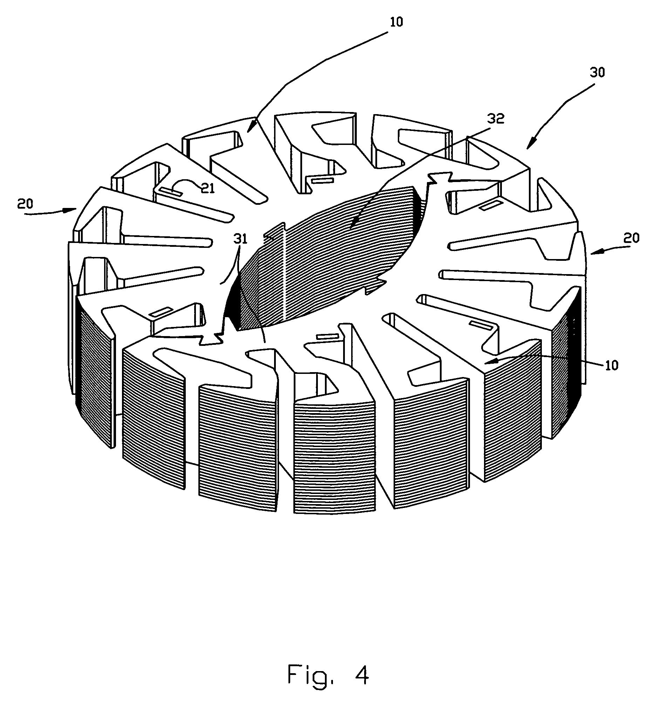

Figure 4 shows two packs 20 assembled together so as to make up a finished core 30 made up of stacked laminations 31, each of which is formed by a pair of juxtaposed half-laminations 10.

Said finished core 30 has an internal axial cavity 32.

The mechanical connections between said two packs 20 (Illustrated purely by way of example are dove-tailed male/female Joints) are such as not to jeopardize substantially the magnetic circuit of the motor because they are made flush, without the introduction of additional air gaps.

Said connections are in fact made with the same high precision as that of the stamping of the metal and guarantee a perfect symmetry of a radial type, i.e., for each point belonging to the profile there exists a homologue thereof equidistant from the centre of the figure and rotated through 180° once again with respect to said centre.

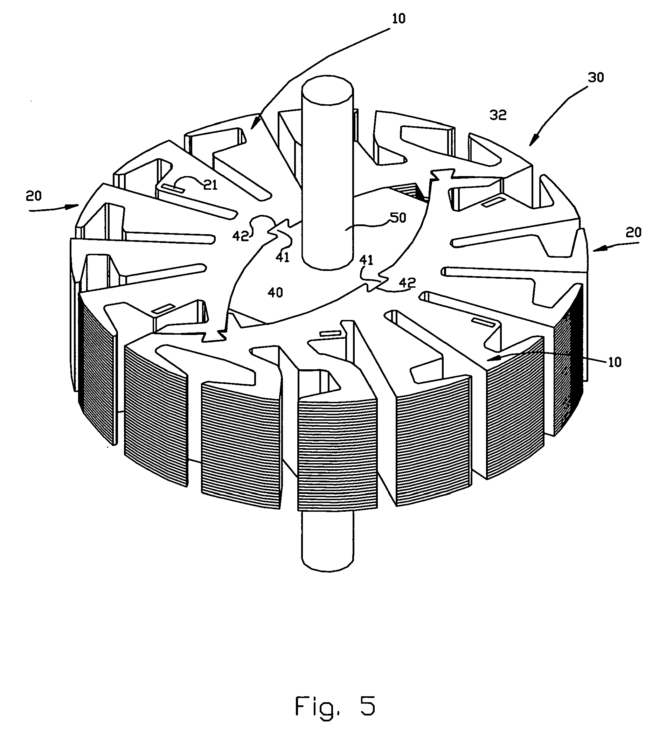

Designated by 40 in Figure 5 is a substantially hub-like means of connection, insected in the internal cavity 32 of said finished core 30 of laminations 31 and having an axial shaft 50. Said hub 40, in this particular case, has external projections 41, slotted In corresponding slots 42 provided in the internal part of said finished core 30. According to the geometry assumed and the material envisaged, said hub could also have functions of closing of the magnetic circuit with respect to the sector annulus of rotor of the laminated core.

Even though It is possible to use a profile of teeth of a traditional type, i.e., with rectilinear radial stem and teeth all equal to one another, the marked shortening of stamping pitch, according to the present invention, which may be considered reasonable in the perspective of containing the costs and production waste, involves the presence of said cavity 32 in the form of deep slotting, inside the finished core 30 that is formed following upon joining of the two packs 20 (Figure 5).

The presence of said slotting 32 markedly limits the radial development of the slats between adjacent teeth 11 that are located on the outer parts of the two half-laminations 10 that make up a lamination 31, whilst it enables the creation of very deep slots between adjacent teeth 11 in the areas that are wider. A structure of traditional rectilinear teeth would affect to a determining extent the diameter of the conductors that can be used on account of the reduced space that can be identified in slots with smaller volume and basically the performance and efficiency of the motor.

According to the present invention, the shape of said slots exploits to advantage this marked geometrical constraint.

It has in fact been possible to link the symmetry to 180° of a typical process of winding with the 180° symmetry of the internal slotting 32 of the finished laminated core 30 by providing a particular geometry of the teeth of the rotor, which are no longer similar to one another.

It is pointed out that the usual methods for making the windings at an industrial level for these motors envisage outer wire guides that enable automatic Insertion of the conductor whilst this turns around the laminated core ("flyer" technology).

Said equipment is in fact made up of one or more rotating arms housing the conductor that is being wound, one or more wire guides that mask the external surface of the laminated core, leaving just the portions corresponding to the slots exposed, and possibly systems of advance of the wire guides themselves to facilitate the operation of insertion. Externally, the wire guides are profiled in such a way as to accompany the conductor in its travel and facilitate its entrance into the slot.

Usually the number of winders for rotors of diameter greater than 30 to 40 mm is even in order to enable a good balancing to rotation and speed up the process.

Typically the winders are two in number set diametrally.

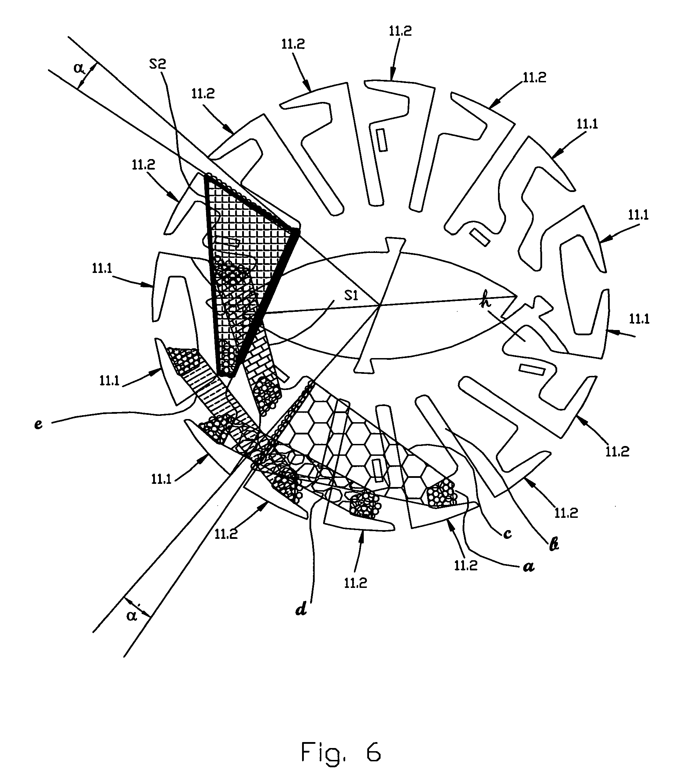

Provided below Is the description of the profiles of the slots between the teeth 11 of the half-laminations 10 according to the invention (Figures 6 - 8).

A premise is that, as in any electric permanent-magnet d.c. motor with commutator, the armature windings have four sides, two of which are active ones and lie within the slots and two are non-active and lie on the front parts of the rotating part. In addition, generally in each slot two there come to be located to sides of winding belonging to different windings.

The envelope of all the non-active portions of winding forms the so-called "winding heads".

With reference to Figure 6, which is a front view of the finished laminated core 30 not completely wound, the outer profile of the rotor has slots that perform in sets the following functions: sets of start-of-winding slots, sets of end-of-winding slots, and sets of intermediate slots.

Hence, once the start-of-winding slots have been determined, it is possible to wind the laminated core 30 in such a way that the first winding wound will occupy the innermost position, and the subsequent ones, wound in progression, will follow an approximately spiral arrangement.

The last winding will occupy the outermost position, so completing the winding. Spaced apart by 180°, another set of windings is positioned on the rotor, simultaneously.

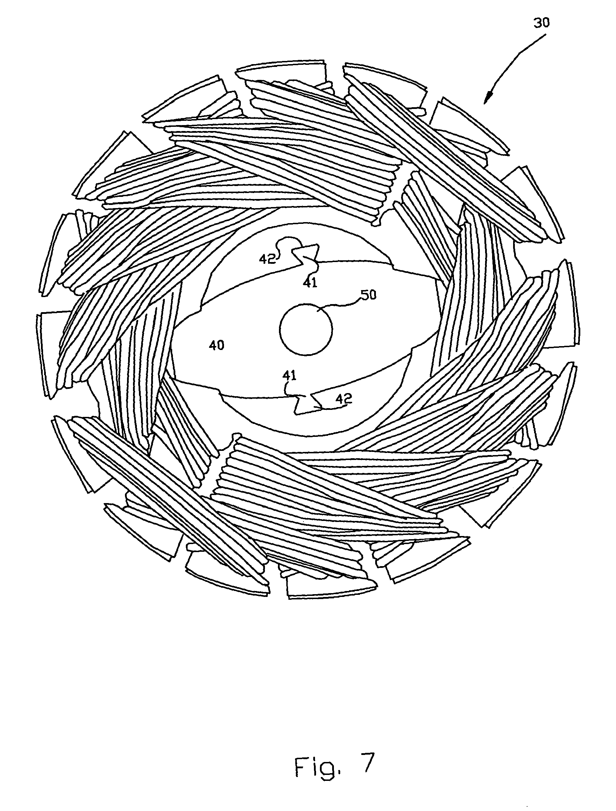

Figure 7 illustrates the laminated core 30 completely wound, and it is possible to note a regular distribution of the conductors on the surface, which to a major extent hides the underlying complex structure of the slots.

Basically, with this profile of slots the marked magnetic and electrical constraints imposed by the internal slotting 32 of the finished core 30 are overcome.

In the set of the teeth constituting the laminated core 30, two distinct tooth structures may be highlighted:
branched teeth (such as the three teeth 11.1, Figure 6); and
teeth having a stem with a rectilinear side (such as the teeth 11.2 of each laminated core 10, Figure 6).

Each set of branched teeth 11.1 is followed by one or more teeth 11.2 with a rectilinear side.

The branched teeth 11.1 result from the logic of branching that follows that of a binary tree, in which at each branching one of the two branches is truncated and does not give rise to subsequent branchings, whilst the other continues and divides into two. The shape of the set of teeth 11.1 with multiple branchings is hence that of a binary tree, where in each bifurcation two sides of different windings are located. The set of three teeth 11.1 with multiple branchings is the set of teeth designed to receive at least one of the two sides of winding of each initial winding and each final winding.

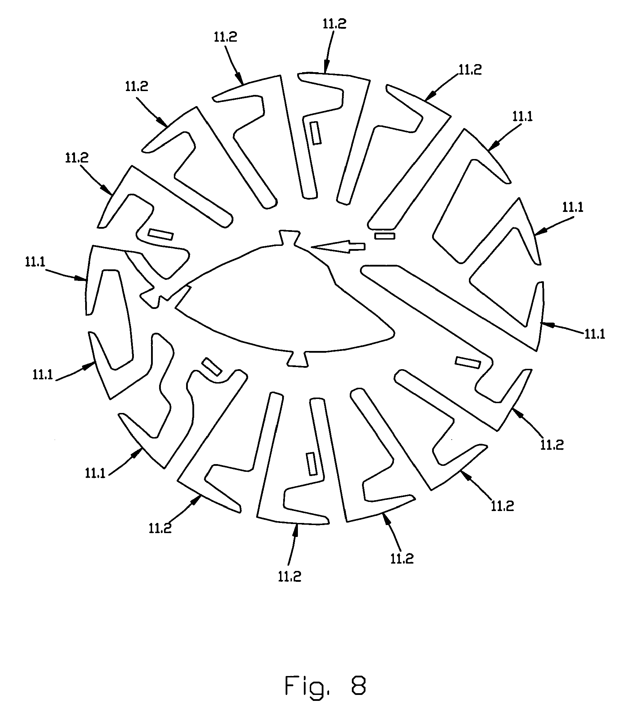

Shown in Figure 8 is a lamination similar to those of the finished core 30 of Figure 6, but in which with a hypothetical elastic stretching of the metal material in the direction indicated by the arrow, the structure of said binary tree is more clearly highlighted.

The shapes of the teeth and the degree of branching are substantially a function of the quantities that are described hereinafter; in particular:
- the number of sets of multiple teeth 11.1 is equal to the number of windings that are being wound simultaneously, i.e., the number of windings that are to be made In parallel to be able to form the armature in its completeness, in this case two; and
- the maximum degree of branching of said binary tree is equal to the winding pitch decreased by one unit.

With reference to Figures 1 to 7, in the case of the laminated core 30, the degree of branching of the tree is equal to 2, and the number of branchings is equal to the degree of the tree + 1, i.e., 3.

The remaining teeth 11.2 of the laminated core 30 are constituted by non-branched teeth, the shape of which is described hereinafter.

Winding starts with the creation of the innermost winding, involving the branched tooth 11.1 in its part of lowest degree of branching, i.e., in its lowest part. It may be noted how the first winding S1 Involves just the branched teeth 11.1. The second winding S2 has one of the two active sides that involves said branched tooth 11.1, but engages it at the immediately higher degree. In progression, the subsequent windings engage all the degrees of the tree until they come out of the branched teeth 11.1 and engage the teeth with rectilinear side 11.2,

At a certain point winding involves the lowest level of the branched tooth 11.1 adjacent to the first one described and continues to engage the subsequent levels thereof up to completion of winding.

To achieve the aforesaid advantages, the slots adjacent to the teeth with rectilinear side 11.2 are profiled so that (see Figure 6) one of the two active sides of winding is received in a "pocket" part of the slot, designated by a), In which the conductors are grouped together in a single bundle that is as compact as possible, hereinafter indicated as "bundle" grouping, and the remaining active side of the winding is received In the remaining part of the slot, narrow and elongated, designated by b), In which the individual conductors are set alongside one another without any mutual overlapping. hereinafter indicated as "layer" grouping.

The final windings, designated by c), d) and e) (hatched, respectively, with hexagons, stones, dashed lines and solid lines) that involve the teeth with multiple branchings 11.1 achieve the aforesaid effect of stratification only partially or do not achieve it at all, but have a length that is shorter than that of the intermediate "bundle to layer" windings. Said windings can be referred to with the term of "bundle to bundle" windings.

The depth of the slots that delimit the teeth with rectilinear sides 11.2 can vary from slot to slot, on account of the presence of the slotting 32 and can be exploited to form slots that are progressively deeper in the intermediate part of each half-lamination 10 in the case where said solution were to lead to an optimization of slot filling for all the slots making up the laminated core and/or minimization of any mutual overlapping between windings.

Consider now the angle a that the rectilinear edge of each tooth 11.2, on which the layer positioning comes to be formed, forms with the radial direction (see Figure 6). Said angle has a positive value, albeit minimal for each tooth with rectilinear sides.

### Definition of positive angle

Consider a polar reference system centred on the axis of the rotor (Figure 6). Considered as positive angles are the ones formed by a rotation of the half-line passing through the origin and rotating in a counterclockwise direction.

Consider a hypothetical tooth with perfectly radial rectilinear profile. Suppose now forcing the head of the tooth by inclining the whole tooth rigidly without deforming it and causing it to rotate at the root. The force applied Is tangential and follows the counterclockwise direction. The angle that the edges of the tooth form with respect to the radial direction is considered positive.

### Advantages:

Said profile of teeth according to the invention, as compared to the traditional profile of teeth, that would be penalized on account of the presence of said slotting 32, enables the following advantages to be achieved:
- optimization of slot filling;
- limitation of the mean length of the winding and hence the amount of copper used; and
- increase in the efficiency of the motor by virtue of said reduction in mean length of winding.

Thanks to said advantages, a motor comprising the armature according to the invention possesses electromechanical characteristics similar or superior to electric motors with armatures with traditional laminated cores having the same principle of operation, dimensions and quality of the materials.

Of course, numerous modifications may be made with respect to what has been described and illustrated merely by way of example, without thereby departing from the scope of the invention and hence from the scope of the present industrial patent right.

Thus, for example, the armature can comprise an axial shaft, which directly engages the axial cavity thereof and is directly fitted into the finished laminated core.

On the other hand, the armature can comprise half-laminations or packs of hslf-laminations which are set up against one another and mutually constrained via appropriate intermediate mechanical connection members (pins, fasteners, joints, etc.) or via welding, gluing, or overmoulding of plastic material. Likewise, the hub connection means can be fixed in the internal axial cavity of the finished core by means of appropriate intermediate mechanical connection members or via welding, gluing, or overmoulding of plastic material.

## Claims

1. An armature with laminated core for an electrical machine, in particular for an electric motor, in which the armature comprises:
- a laminated core formed by a pack of laminations stacked on top of one another, said laminations being obtained by stamping from a sheet of metal;
- a plurality of peripheral slots provided in the pack of laminations;
- a coil, comprising a plurality of windings of an insulated electrical conductor, which extend in peripheral slots of the pack of laminations,
said armature being **characterized in that** each lamination (31) comprises two identical halves (10), so-called "half-laminations", each of which is substantially shaped like a crescent, having a convex edge part and an internal concavity, which are assembled in such a way as to be symmetrical with respect to the axis of rotation of the motor and obtain a finished-core body (30) having a basically cylindrical shape.

2. The armature according to Claim 1, **characterized in that** it comprises two packs (20) of haif-laminations (10). Identical and radially symmetrical with respect to one another.

3. The armature according to Claim 2, **characterized in that** in each of said two packs (20) of said half-laminations (10) are connected to one another by mechanical, thermal, or chemical means or by overmoulding of plastic material.

4. The armature according to one or more of the preceding claims, **characterized in that** said two packs (20) are assembled with respect to one another so as to make up a finished laminated core (30) made up of stacked laminations (31), each formed by a pair of juxtaposed half-laminations (10).

5. The armature according to one or more of the preceding claims, **characterized in that** said two packs (20) are assembled with respect to one another by mechanical, thermal, or chemical means or by overmoulding of plastic material.

6. The armature according to one or more of the preceding claims, **characterized in that** said finished core (30) has an internal axial cavity (32) used for inserting inside it a substantially hub-like connection means (40), possibly carrying an axial shaft (50), constrained thereto and fixed with respect to said core (30) by mechanical, thermal, or chemical means or by overmoulding of plastic material.

7. The armature according to Claim 6, **characterized in that** said internal axial cavity (32) has the form of deep slotting Inside the finished laminated core (30) made up of laminations (31) and **in that** the two half-laminations (10) making up each lamination (31) have, in their outer area, slots between adjacent teeth (11) that are of limited radial development and, in other areas, slots between adjacent teeth (11) that are very deep.

8. The armature according to one or more of the preceding claims, **characterized in that** said finished core (30) made up of laminations (31) comprises a set of branched teeth (11.1), followed by one or more teeth having a stem with a rectilinear side (11.2).

9. The armature according to Claim 8, **characterized in that** each set of branched teeth (11.1) has a binary-tree shape, in which at each branching one of the two branches is truncated and does not give rise to subsequent branchings, whilst the other branch continues and divides into two, and where in each bifurcation two sides of different windings are located.

10. The armature according to Claim 8 and/or Claim 9, **characterized in that** a set of branched teeth (11.1) is the set of teeth designed to receive at least one of the two sides of winding of each initial and final winding, and the number of sets of branched teeth (11.1) is equal to the number of windings to be wound simultaneously, i.e., to the number of windings that are made basically at the same moment to obtain the armature as a whole, whilst the maximum degree of branching of said binary tree is equal to the winding pitch decreased by one unit.

11. The armature according to one or more of Claims 8 to 10, **characterized in that** the slots adjacent to said teeth with rectilinear side (11.2) each have a "pocket" part (a), in which one of the two active sides of winding is received and in which the conductors are grouped in a single bundle as compact as possible, the so-called "bundle grouping", whilst the remaining active side of the winding is received in the remaining part (b) of the slot, narrow and elongated, in which the individual conductors are set alongside one another without any mutual overlapping, so-called "layer grouping", whilst overlapping of said groupings is possible.

12. The armature according to one or more of Claims 8 to 11, **characterized in that**, the depth of the slots that delimit the teeth with rectilinear sides (11.2) can differ from slot to slot to optimize slot filling for all the slots constituting the finished core (30) made up of laminations (31).

13. The armature according to one or more of Claims 8 to 12, **characterized in that** the rectilinear edge of each tooth with rectilinear side (11.2), on which the layer positioning of conductors is formed, forms, with the radial direction, an angle having a positive value.

14. The armature according to one or more of the preceding claims, **characterized in that** the envelope of the outer profiles of the teeth (11) of said half-lamination (10) substantially has the shape of a half-circumference (10.1), of radius equal to the radius of the final cylindrical core (30) made up of assembled laminations (31), whilst the inner portion of said half-lamination (10) coincides with a profile shaped like a half-circumference (10.2) having, for an ample portion. substantially the same radius as the outer profile, in such a way that the substantial equality of the two arcs of circumference (10.1, 10.2) optimizes exploitation of the strip or sheet of metal used to obtain the individual half-laminations (10) that make up said laminated core.

15. A process for producing a laminated-core armature for an electrical machine, in particular an electric motor, according to one or more of the preceding claims, in which said core (30) made up of laminations (31) comprises a set of branched teeth (11.1) having a binary-tree shape, followed by one or more teeth having a stem with a rectilinear side (11.2), said process being **characterized in that** the winding, comprising a plurality of windings of insulated electrical conductor, is formed starting from the creation of the innermost winding, involving initially a first branched tooth (11.1) In its part with lowest degree of branching, i.e., in its lowest part, so that the first winding (S1) involves just the branched teeth (11.1), the second winding (S2) has one of the two active sides that Involves said first branched tooth (11.1) and engages it at the degree immediately higher than the first winding, the windings subsequent to the second one engage all the degrees of the branched tree (11.1), until they come out of said branched teeth (11.1) and start to engage the teeth with rectilinear side (11.2), after which they involve the lower level of the branched tooth (11.1) adjacent to said first branched tooth (11.1), and continue engaging the subsequent levels thereof up to completion of the winding.
